Europäisches Patentamt

European Patent Office

Office européen des brevets

(11) Veröffentlichungsnummer: **0 427 944 A1**

# (12) EUROPÄISCHE PATENTANMELDUNG

(21) Anmeldenummer: 90118793.0

(51) Int. Cl.5: **A61C 17/02**

(22) Anmeldetag: 01.10.90

(30) Priorität: 14.11.89 DE 3937876

(43) Veröffentlichungstag der Anmeldung:
22.05.91 Patentblatt 91/21

(84) Benannte Vertragsstaaten:
**AT BE CH DE FR GB LI**

(71) Anmelder: **Braun Aktiengesellschaft**
**Frankfurter Strasse 145**
**W-6242 Kronberg/Taunus(DE)**

(72) Erfinder: **Voigt, Gottfried**
**Narzissenstrasse 17**
**W-6000 Frankfurt am Main(DE)**

(54) **Mundpflegegerät.**

(57) Ein Mundpflegegerät (1) mit einer Munddusche (2) wird über eine in einem Gehäuse (6) angeordnete Pumpe mit Wasser aus einem Wasserbehälter (8) versorgt, der mit seinem Auslaufstutzen (12) in einen zur Pumpe gehörenden Einlaufstutzen (16) einsetzbar ist. Zwischen dem Deckel (28) des Gehäuses (6) und dem oberen Rand des Einlaufstutzens (16) sitzt ein Dichtungsteil, an das sich ein zweites Dichtungsteil (31) anschließt, das gegen den Außenumfang (44) des Auslaufstutzens (12) anpreßbar ist. Das erste und zweite Dichtungsteil (31) bilden ein einteiliges Doppeldichtungsteil (30).

## Fig. 2

# MUNDPFLEGEGERÄT

Die Erfindung betrifft ein Mundpflegegerät mit einer Munddusche, bei dem ein Gehäuse einen Einlaßstutzen aufweist, der an einen Deckel des Gehäuses angeschlossen ist und ein Dichtungselement zwischen dem Deckel und dem Einlaßstutzen angeordnet ist, wobei in den Einlaßstutzen ein Auslaßstutzen eines flüssigkeitsbehälters nach außen abgedichtet einsetzbar ist.

Es ist bereits ein derartiges Mundpflegegerät aus der US-PS 3 524 208 bekannt. Das Dichtungselement bewirkt eine Abdichtung zwischen dem Einlaufstutzen und dem Gehäuse der Munddusche und verhindert ein Eindringen von Flüssigkeit in den Innenraum des Gehäuses. Zwischen der Außenseite des Auslaufstutzens und der Innenoberfläche des Einlaßstutzens sitzt eine zweite Dichtung, nämlich ein O-Ring, der die Innenräume der beiden Stutzen nach außen hin abdichtet und dafür sorgt, daß bei aufgesetztem Wasserbehälter keine Flüssigkeit zwischen Auslaß- und Einlaßstutzen nach außen treten kann. Der Einsatz zweier separater Dichtungselemente ist montageaufwendig und teuer. Darüber hinaus hat der Einsatz einer O-Ring-Dichtung den Nachteil, daß diese sich beim Einschieben des Auslaufstutzens des Wasserbehälters in den Einlaufstutzen wegschieben kann, so daß eine einwandfreie Abdichtung nicht sichergesteellt ist. Insbesondere wird bei dem Einsatz der O-Ring-Dichtung zwischen Auslauf- und Einlaufstutzen eine Ankoppelung des Wasserbehälters an das Gehäuse dadurch erschwert, daß der Wasserbehälter vom Benutzer mit einigem Kraftaufwand auf das Gehäuse zu drücken ist, um ein ausreichend tiefes Hineingleiten des Auslaufstutzens in den Einlaufstutzen und damit eine sichere Abdichtung zu gewährleisten.

Demgegenüber liegt der Erfindung die Aufgabe zugrunde, das Mundpflegegerät einfacher und kostengünstiger auszugestalten und sicherzustellen, daß sich das Dichtungselement beim Einsetzen des Auslaufstutzens des Wasserbehälters in den Einlaufstutzen zur Pumpe nicht aus dem Dichtsitz herausschiebt. Das Einsetzen des Auslaufstutzens in den Einlaufstutzen soll zur Herstellung einer einwandfreien Abdichtung möglichst ohne oder nur mit sehr geringem Kraftaufwand möglich sein.

Diese Aufgabe wird dadurch gelöst, daß das Dichtungselement als Doppeldichtungsteil ausgebildet ist, wobei sich an einen zwischen dem Deckel des Gehäuses und dem Einlaßstutzen eingeklemmten Dichtungsteil ein insbesondere als Ringdichtung ausgebildeter Dichtungsteil anschließt, der sich in den Einlaßstutzen der Zulaufeinrichtung erstreckt. Durch die Verwendung nur eines Dichtungselements mit verschiedenen Dichtungsflächen lassen sich die Montage- und Herstellungskosten der Munddusche herabsetzen. Durch die einteilige Ausbildung des Doppeldichtungselementes läßt sich der erste Teil des Doppeldichtungselementes zwischen dem Boden des Gehäuses und dem oberen Ende des Einlaßstutzens fest einklemmen, so daß der Innenraum des Gehäuses nach außen hin abgedichtet ist. Da der erste Dichtungsteil fest eingeklemmt ist und der zweite mit diesem verbundene, sich konisch verjüngende Ring-Dichtungsteil sich in den Einlaßstutzen erstreckt, ist sichergestellt, daß beim Einführen des Auslaufstutzens des Wasserbehälters in den Einlaßstutzen der Dichtungsteil sich nicht aus seinem Dichtungssitz verschiebt. Auch kann der Auslaßstutzen des Wasserbehälters ohne Kraftaufwand in die Bohrung des Einlaßstutzens eingeführt werden. Dabei lehnt sich die innen liegende Ringfläche des Ringdichtungsteils gegen die Außenoberfläche des Auslaufstutzens an und dichtet diesen ebenfalls nach außen hin ab.

Das Einführen des Auslaßstutzens in den Einlaßstutzen wird dadurch wesentlich verbesssert, daß der Dichtungsteil eine konisch verjüngende Ringfläche aufweist, an der das vordere Ende des Auslaßstutzens beim Aufsetzen des Wasserbehälters auf den Boden des Gehäuses entlanggleitet. Diese Maßnahme bewirkt ein leichtes Einführen des Auslaßstutzens in den Einlaßstutzen und verringert den Verschleiß des Dichtungsteils. Dabei ist es vorteilhaft, daß die Ringfläche mit der vertikal verlaufenden Mittelachse des aufgesetzten Wasserbehälters einen nach oben offenen, spitzen Winkel $\alpha$ bildet, wobei das vordere Ende des Auslaufstutzens mit einer schräg verlaufenden Fase versehen ist. Hierdurch werden die Reibwerte zwischen der Ringoberfläche und der Fase noch weiter verkleinert, so daß der Wasserbehälter ohne großen Kraftaufwand mit seinem Einlaufstutzen in den Auslaufstutzen eingesetzt werden kann. Um eine gute Abdichtung zu erhalten und die Reibwerte klein zu halten, geht das untere Ende der Ringfläche in eine Dichtlippe über, die dachförmig ausgebildet ist.

In weiterer Ausgestaltung der Erfindung ist es besonders vorteilhaft, daß im Einlaufstutzen eine ringförmige Erweiterung vorgesehen ist, in die beim Einführen des Auslaßstutzens der Dichtungsteil ausweichen kann. Der konisch. verlaufende Dichtungsteil kann während und nach dem Einführen des Auslaßstutzens soweit zurückweichen, daß einmal eine ausreichende Dichtung gewährleistet wird, zum anderen eine Beschädigung bzw. Verschleiß des Dichtungsteils vermieden wird. Insbesondere ermöglicht diese äußerst vorteilhafte Ausgestaltung ein Einführen des Auslaßstutzens in den Einlaßstutzen praktisch ohne jeden Kraftaufwand, sofern die Verformbarkeit des Dichtungsmaterials entsprechend festgelegt ist. In der Wahl der Verformbarkeit des Materials ist man jedoch bei der vorliegenden Dichtung relativ frei, da die Fixierung der Dichtung durch Klemmen zwischen zwei Teilen erfolgt. Eine herkömmliche O-Ring-Dichtung wird in aller Regel in einer Ringnut fixiert und rutscht oder rollt bei einer zu hohen Verformbarkeit des Dichtungsmaterials im vorliegenden Anwendungsfall aus der Ringnut heraus. Wird jedoch Material geringer Verformbarkeit für die O-Ring-Dichtung eingesetzt, erhöhen sich die Kräfte zum dichten Verbinden der Stutzen erheblich, wodurch das Aufsetzen des Wasserbehälters auf das Gehäuse für den Benutzer deutlich erschwert wird.

In weiterer Ausgestaltung der Erfindung ist es vorteilhaft, daß das Dichtungselement aus drei Bereichen gebildet ist, nämlich aus zwei Dichtungsteilen, wobei der zweite Dichtungsteil durch parallel verlaufende Dichtflächen gebildet wird und aus einem dritten Abschnitt besteht, der sich nach oben konisch erweitert und zwischen der Deckelunterseite und einem Ringflansch am oberen Ende des Einlaufstutzens eingeklemmt ist.

In der Zeichnung sind zwei Ausführungsbeispiele einer Munddusche nach der Erfindung schematisch dargestellt. Weitere Vorteile der Erfindung ergeben sich aus der nachfolgenden Beschreibung und der Zeichnung. Es zeigen:

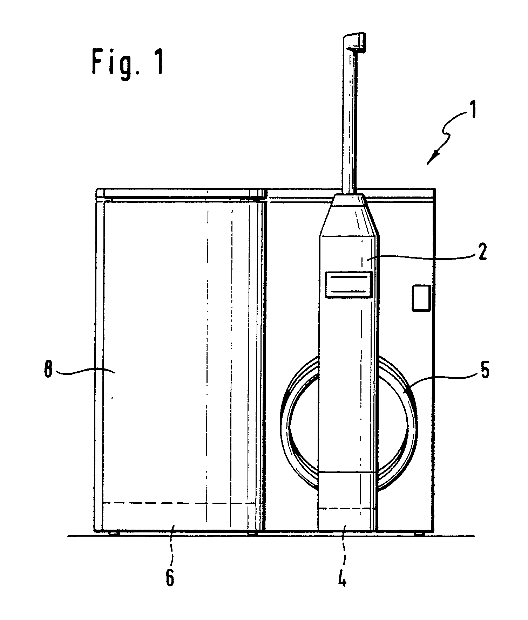

Fig. 1 eine Darstellung eines Mundpflegegerätes mit einer Munddusche und einem auf einem Gehäuse angeordneten Wasserbehälter,

Fig. 2 eine Schnittdarstellung durch den unteren Teil des Wasserbehälters und den zugehörigen Auslaßstutzen, der in einen Einlaßstutzen des Gehäuses eingesetzt ist,

Fig. 3 ein weiteres Ausführungsbeispiel der Abdichtung zwischen dem unteren Teil des Wasserbehälters und dem zugehörigen Gehäuse zur Aufnahme der Pumpe, wobei die in der linken Hälfte in gestrichelten Linien dargestellte Stellung eine Variante der Dichtung zeigt, die in eine Aussparung des Einlaßstutzens vollständig eingedrückt ist, während in der rechten Hälfte der Figur 3 der Auslaßstutzen des Wasserbehälters sich in einer Einführphase befindet, kurz bevor er das Dichtungselement berührt.

In der Zeichnung ist mit 1 ein Mundpflegegerät bezeichnet, zu dem eine Munddusche 2 gehört, die in einer Halterung 4 aufgenommen ist und über einen Schlauch 5 mit einer in der Zeichnung nicht dargestellten, in einem Gehäuse 6 angeordneten, elektrisch antreibbaren Pumpe verbunden ist.

Auf dem Gehäuse 6 ist ein Wasserbehälter 8 aufgesetzt, der aus einem oberen Behälterteil 9 zur Aufnahme des Wassers und einem unteren, zylindrischen Gehäuseteil 10 besteht. Zwischen dem Behälterteil 9 und dem zylindrischen Gehäuseteil 10 befindet sich ein Boden 11 mit einem Auslaßstutzen 12, der mittels eines über eine Druckfeder 13 verstellbaren Ventils 14 verschlossen werden kann, so daß kein Wasser aus dem Behälterteil 9 abfließen kann, wenn dieser nach oben abgehoben wird.

Der Wasserbehälter 8 ist mit seinem zylindrischen Gehäuseteil 10 auf das Gehäuse 6 aufsetzbar. Wird der Wasserbehälter 8 auf das Gehäuse 6 aufgesetzt, so wird der Auslaßstutzen 12 in eine zylindrische Bohrung 15 eines Einlaßstutzens 16 eingeschoben, wobei das Ventil 14 durch Anlage gegen einen Stößel 18 in der Bohrung 15 aus der in ausgezogen Linien dargestellten Stellung A (Sperrstellung) in eine in gestrichelten Linien dargestellte Stellung B (Durchflußstellung) verschoben wird. Bei Herausnahme des Wasserbehälters 8 mit dem zugehörigen Auslaßstutzens 12 aus der Bohrung 15 verschiebt die Druckfeder 13 das Ventil 14 wieder in die Sperrstellung, wobei der Ventilteller 21 des Ventils 14 auf seinen Ventilsitz 22 aufgesetzt wird. Die Druckfeder 13 ist auf einem Dorn 23 geführt, der mit einer Halterung 24 verbunden ist, die am Boden 11 des Wasserbehälters 8 befestigt ist. Die Halterung 24 weist mindestens zwei Durchlaßöffnungen 25 auf, so daß das im Wasserbehälter 8 befindliche Wasser über die Durchlaßöffnung 25 abfließen kann. Unterhalb des Auslaßstutzens 12 befindet sich auf der Längsmittelachse des Auslaßstutzens 12 ein Einlaßstutzen 16 mit dem Stößel 18. Über den Einlaßstutzen 16 und eine anschließende Leitung wird eine in der Zeichnung nicht dargestellte Pumpe mit Wasser versorgt. Der Einlaßstutzen 16 ist in dem Gehäuse 6 aufgenommen und an seinem oberen Ende mit einem Flansch 26 versehen, der an seiner Unterseite eine ringförmige Vertiefung 27 aufweist, in die verschiedene, am Deckel 28 des Gehäuses 6 vorgesehene Haken 29 einrasten, so daß der Einlaßstutzen 16 fest mit dem Gehäuse 6 verbunden ist.

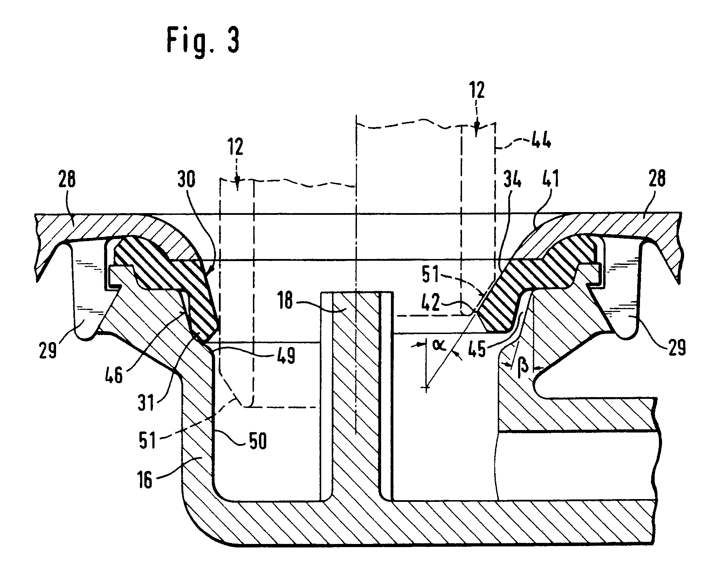

Der Innenraum des Einlaßstutzens 16 wird gegenüber dem Gehäuse und bei aufgesetztem Wasserbehälter 8 nach außen hin über ein Doppeldichtungsteil 30 abgedichtet, das aus mindestens zwei Abschnitten bestehen kann, wobei der eine Abschnitt als Ring-Dichtungsteil 31 mit einer sich konisch verjüngenden Ringfläche 34 und einer Dichtlippe 35 ausgebildet ist. Der zweite Abschnitt besteht aus einem horizontal verlaufenden, zwei Dichtflächen 36 und 37 aufweisenden Dichtungsteil 32. Ein dritter Abschnitt 33 erweitert sich nach oben konisch und ist zwischen der Deckelunterseite 39 des Gehäuses 6 und einem Ringflansch 40 am Einlaßstutzen 16 eingeklemmt. Der Deckel 28 ist im Bereich der Bohrung 15 des Einlaßstutzens 16 mit einem Bogenstück 41 (Fig. 3) ausgestattet, das in der gleichen, geneigt verlaufenden Ebene wie die Ring fläche 34 endet, die mit der Längsmittelachse der Bohrung 15 einen nach oben offenen Winkel α zwischen 20° und 50° einschließt. Das untere Ende 42 der Ringfläche 34 geht in die Dichtlippe 35 über. Dabei ist in vorteilhafter Weise die Dichtlippe dachförmig ausgebildet und lehnt sich bei eingesetztem Wasserbehälter 8 gegen den Außenumfang 44 des Auslaßstutzens 12 an und dichtet somit den Innenraum der Bohrung 15 bei auf das Gehäuse 6 aufgesetztem Wasserbehälter 8 nach außen hin ab.

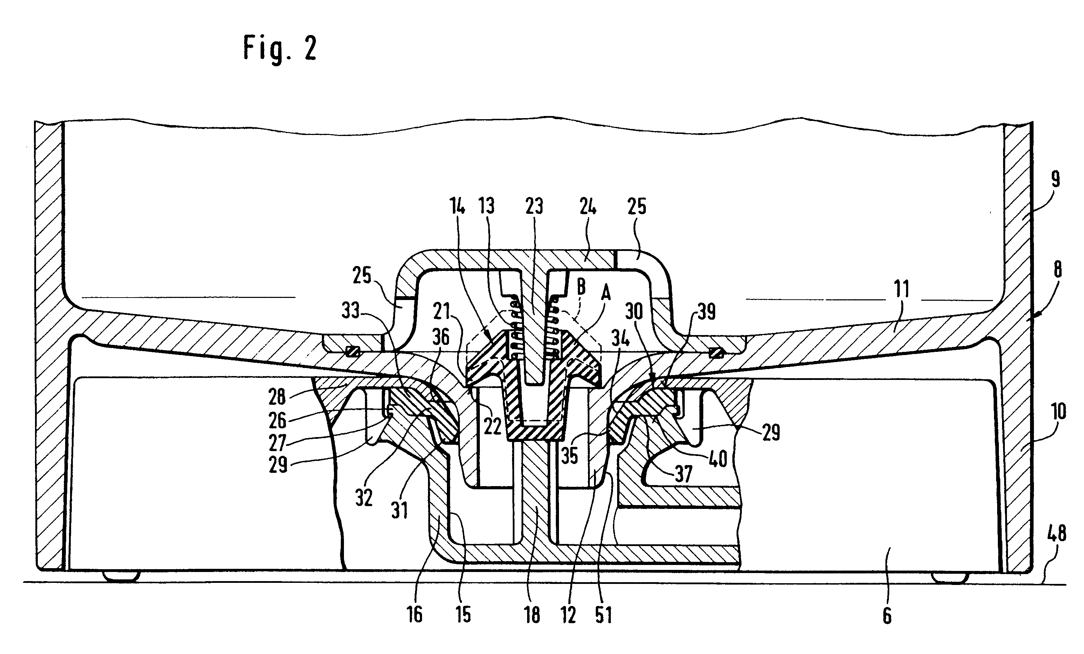

In Fig. 2 ist der Wasserbehälter 8 mit dem zugehörigen Auslaßstutzen 12 in aufgesetztem Zustand dargestellt, wobei die gestrichelte Stellung B des Ventils 14 die Durchflußstellung angibt. In dieser Stellung des Ventils 14 liegt die Dichtlippe 35 gegen den Außenumfang 44 des Auslaßstutzens an, wobei die Rückseite des ersten Abschnittes 31 mit Abstand zu einer ringförmigen Erweiterung 45 im oberen Bereich des Einlaßstutzens 16 angeordnet ist.

Gemäß der linken Hälfte der Figur 3, die eine weitere vorteilhafte Abdichtungsmöglichkeit nach der Erfindung darstellt, ist der erste Abschnitt des Doppeldichtungsteils 30 gegen die Wand 46 der ringförmigen Erweiterung 45 gepreßt, so daß im eingebauten Zustand des Wasserbehälters 8 der Einlaßstutzen 12 einen sehr guten Sitz erhält. Die ringförmige Erweiterung 45 weist mit Bezug auf die Standfläche 48 des Mundpflegegerätes 1 eine sich nach unten konisch verjüngende Wand 46 auf, an deren unteres Ende sich ein Bogenstück 49 anschließt, das in die zylinderförmige Ringwand 50 des Einlaßstutzens 16 übergeht. Die ringförmige Wand 46 der ringförmigen Erweiterung 45 bildet mit der Mittelachse des Einlaßstutzens 16 einen nach oben offenen, spitzen Winkel β , so daß der Ringdichtungsteil 31 eine gute Anlage erhält, wenn er gegen die Wand 46 gepreßt wird.

**Ansprüche**

1. Mundpflegegerät (1) mit einer Munddusche (2), bei dem ein Gehäuse (6) einen Einlaßstutzen (16) aufweist, der an einen Deckel (28) des Gehäuses (6) angeschlossen ist und ein Dichtungselement zwischen dem Deckel (28) und dem Einlaßstutzen (16) angeordnet ist, wobei in den Einlaßstutzen (16) ein Auslaßstutzen (12) eines Flüssigkeitsbehälters nach außen abgedichtet einsetzbar ist, dadurch gekennzeichnet, daß das Dichtungselement als Doppeldichtungsteil (30) ausgebildet ist, wobei sich an einen zwischen dem Deckel (28) des Gehäuses (6) und dem Einlaßstutzen (16) eingeklemmten Dichtungsteil (32) des Doppeldichtungsteiles (30) ein Dichtungsteil (31) anschließt, der sich in den Einlaßstutzen (16) erstreckt.

2. Mundpflegegerät nach Anspruch 1, dadurch gekennzeichnet, daß der Dichtungsteil (31) eine sich konisch verjüngende Ringfläche (34) aufweist, an der das vordere Ende des Auslaßstutzens (12) beim Aufsetzen des Wasserbehälters (8) auf den Deckel (28) des Gehäuses (6) entlanggleitet.

3. Mundpflegegerät nach Anspruch 2, dadurch gekennzeichnet, daß die Ringfläche (34) mit der vertikal verlaufenden Mittelachse des aufgesetzten Wasserbehälters (8) einen nach oben offenen, spitzen Winkel (α) bildet, und das vordere Ende des Auslaßstutzens (12) mit einer Fase (51) versehen ist.

4. Mundpflegegerät nach Anspruch 2, dadurch gekennzeichnet, daß das untere Ende (42) der Ringfläche (34) in eine Dichtlippe (35) übergeht.

5. Mundpflegegerät nach Anspruch 4, dadurch gekennzeichnet, daß die Dichtlippe (35) dachförmig ausgebildet ist.

6. Mundpflegerät nach einem oder mehreren der vorhergehenden Ansprüche, dadurch gekennzeichnet, daß im Einlaufstutzen (16) eine ringförmige Erweiterung (45) vorgesehen ist, in die der Dichtungsteil (31) beim bzw. nach dem Einführen des Auslaßstutzens (12) in den Einlaßstutzen (16) ausweichen kann.

7. Mundpflegegerät nach einem oder mehreren der vorhergehenden Ansprüche, dadurch gekennzeichnet, daß eine Wand (46) der ringförmigen Erweiterung (45) eine Anlagefläche für den Dichtungsteil (31) bei eingeführtem Auslaßstutzen (12) bildet.

8. Mundpflegegerät nach wenigstens einem der vorhergehenden Ansprüche, dadurch gekennzeichnet, daß das Doppeldichtungsteil (30) aus drei Bereichen gebildet ist, nämlich aus zwei Dichtungsteilen (31, 32), wobei der zweite Dichtungsteil (32) durch parallel verlaufende Dichtflächen (36, 37) gebildet wird und aus einem dritten Abschnitt (33) besteht, der sich nach oben konisch erweitert und zwischen der Deckel unterseite (39) und einem Ringflansch (40) am oberen Ende des Einlaufstutzens (16) eingeklemmt ist.

Fig. 1

Fig. 2

EP 0 427 944 A1

# Fig. 3

**Europäisches Patentamt**

# EUROPÄISCHER RECHERCHENBERICHT

Nummer der Anmeldung

**EP 90 11 8793**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 029 636   (TELEDYNE LTD) <br> * Ansprüche 12,13; Figuren 4,5 * <br> – – – | 1,2,4,5,7, 8 | A 61 C 17/02 |
| X | DE-C-5 553 34   (REISS et al.) <br> * Figuren 1,2 * <br> – – – | 1-3,6,7 | |
| X | FR-A-2 129 728   (INST. RECHERCHE WOOG) <br> * Figur 4 * <br> – – – | 1,2 | |
| A | EP-A-0 243 581   (BLENDAX) <br> * Spalte 2, Zeilen 16-44 * <br> – – – – – | 1,3 | |

| RECHERCHIERTE SACHGEBIETE (Int. Cl.5) |
|---|
| A 61 C <br> A 61 H |

Der vorliegende Recherchenbericht wurde für alle Patentansprüche erstellt

| Recherchenort | Abschlußdatum der Recherche | Prüfer |
|---|---|---|
| Den Haag | 05 Dezember 90 | GIMENEZ BURGOS R. |